Europäisches Patentamt

European Patent Office

Office européen des brevets

(19)

(11) EP 0 986 854 B1

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(21) Anmeldenummer: 97923739.3

(22) Anmeldetag: **19.04.1997**

(51) Int Cl.⁷: **H02K 41/03**, H02K 1/12

(86) Internationale Anmeldenummer:
**PCT/DE97/00783**

(87) Internationale Veröffentlichungsnummer:
**WO 97/040573 (30.10.1997 Gazette 1997/46)**

(54) **VERFAHREN ZUR HERSTELLUNG EINES SPULENKÖRPERS FÜR EINEN DIREKTANTRIEB, SOWIE KERNBLECH FÜR DEN SPULENKÖRPER**

PROCESS OF PRODUCTION OF A COIL BODY FOR A DIRECT DRIVE, AND CORE LAMINATION FOR THE COIL BODY

PROCEDE DE FABRICATION D'UN CORPS DE BOBINE POUR UN MECANISME D'ENTRAINEMENT DIRECT, ET TOLE DE NOYAU POUR CE CORPS DE BOBINE

(84) Benannte Vertragsstaaten:
**AT CH DE FI FR GB IT LI NL**

(30) Priorität: **20.04.1996 DE 19615641**

(43) Veröffentlichungstag der Anmeldung:
**22.03.2000 Patentblatt 2000/12**

(73) Patentinhaber:
• **PASIM Direktantriebe GmbH**
  **98529 Suhl (DE)**
• **Dreifke, Nils**
  **98529 Suhl (DE)**

(72) Erfinder:
• **DREIFKE, Günter**
  **D-98529 Suhl (DE)**
• **MARTIN, Klaus**
  **D-98527 Suhl (DE)**
• **WENDORFF, Eckardt**
  **D-98528 Suhl (DE)**

(56) Entgegenhaltungen:
DE-A- 4 413 601          DE-A- 4 436 865

• **Handbuch "Elektrische machines - Deel 3, Asynchrone motoren", ACCO, 1986, ISBN 90 334 1334 5, Seiten 29-32**

EP 0 986 854 B1

**Beschreibung**

Die vorliegende Erfindung betrifft die Ausgestaltung eines Kernblechs für einen Spulenkörper für einen Direktantrieb, insbesondere einen Linear- oder Planarantrieb, sowie ein Verfahren zur Herstellung dieses Spulenkörpers.

In letzter Zeit kommen insbesondere in der Feinmechanik und Gerätetechnik immer häufiger Direktantriebe, insbesondere Linearmotoren zum Einsatz, deren wesentlicher Vorteil in der Integration mehrerer für Antriebseinheiten erforderlicher Funktionen in wenigen Baueinheiten besteht. Derartige Linearantriebe besitzen, so wie andere Motoren, die nach dem elektromagnetischen Prinzip arbeiten, eine Aktiveinheit und eine Passiveinheit. Die Krafterzeugung wird durch das Zusammenwirken dieser beiden Einheiten unter Ausnutzung der im magnetischen Feld wirkenden Kräfte erreicht, wobei sowohl die Aktiveinheit als auch die Passiveinheit das sich gegenüber der jeweils anderen Einheit bewegende Motorteil sein kann. Bei geeigneter konstruktiver Gestaltung, wie sie häufig bei Linearantrieben anzutreffen ist, übernehmen die Krafterzeugungselemente gleichzeitig die Funktion der Führung der sich bewegenden Teile und stellen zudem das Gestellsystem für beliebige Anwendungen dar.

Ein derartiger Linearantrieb ist z.B. in der deutschen Offenlegungsschrift DE 32 08 380 A1 beschrieben. Hier handelt es sich um einen bürstenlosen Gleichstromlinearmotor, bei welchem in der Aktiveinheit Permanentmagneten und Elektromagneten zur Erzeugung eines steuerbaren Magnetflusses kombiniert sind, während die Passiveinheit aus einem mit Polzähnen versehenen Weicheisenstreifen besteht. Die in der Aktiveinheit verwendeten Spulenkörper bestehen aus Kernblechen herkömmlicher Form.
Derartige Gestaltungen ermöglichen keinen kleinen modularen Aufbau der Aktiveinheit und gewährleisten nicht ein hohes Verhältnis zwischen Krafterzeugung und erforderlichem Volumen der Aktiveinheit.

In der vorangegangenen Patentanmeldung DE 196 43 518.8 wird vom Anmelder ein Linearantrieb beschrieben. Dort sind auch Ausführungen zur prinzipiellen Funktionsweise und zum Aufbau derartiger Direktantriebe gemacht.

In der amerikanischen Patentschrift US 4 563 602 ist ein Linearmotor beschrieben, der unter anderem eine einfach aufgebaute Aktiveinheit besitzt und sowohl als Einphasensynchronmaschine als auch als Mehrphasensynchronmaschine ausgestaltet sein kann.
Die verwendeten Kernbleche für den Spulenkörper weisen einen rechteckigen Querschnitt auf. Derartige Ausgestattungen des Kernblechs rufen Schwierigkeiten beim Einbringen der elektrischen Wicklung in die aus den Kernblechen aufgebauten Kernblechpakete hervor, die sich nur durch den Einsatz teurer und komplizierter Wickelautomaten umgehen lassen. Weiter - hin weisen die gezeigten Kernbleche in der Mitte eine Öffnung zur Aufnahme der Wicklung auf, die ebenfalls einen rechteckigen Querschnitt besitzt. Bei der Herstellung eines derartigen Spulenkörpers wird der Spulendraht durch einen Spalt zwischen den beiden Polschenkeln des Kernblechs in diese Öffnung eingelegt. Um eine hohe Packungsdichte des Spulendrahtes zu erreichen, sind komplizierte Wickelmaschinen erforderlich, da nur durch das gezielte Einlagen jeder einzelnen Wicklung der rechteckige Querschnitt der Öffnung des Kernblechs einigermaßen ausgefüllt werden kann. Insbesondere in den Eckbereichen verbleiben aber zwangsläufig Bereiche, in die der Spulendraht nicht eingelegt werden kann, wodurch sich die erzeugbare Antriebskraft verringert. Damit wird das Verhältnis zwischen zu erzeugender Kraft und erforderlichem Volumen und Masse des Motorteils ungünstig beeinflußt.

Das im Prioritätsintervall veröffentlichte Dokument DE 44 36 865 offenbart einen modularen Planarläufer mit einem Spulenkörper, der aus Kernblechen mit kreisrunder Aussparung zusammengesetzt ist.

Der vorliegenden Erfindung liegt somit die Aufgabe zugrunde, ein Kernblech für einen Spulenkörper zur Verfügung zu stellen, mit welchem bei gleichbleibendem oder geringerem Gewicht und Volumen höhere Antriebskräfte erzielt werden können. Die Nachteile des Standes der Technik sollen vermieden werden, insbesondere ist angestrebt, die Packungsdichte der Wicklungen und Spulenkörper zu erhöhen unter gleichzeitiger Ermöglichung einfacher Herstellungsverfahren.

Diese Aufgabe wird gelöst, indem ein Kernblech für einen derartigen Spulenkörper zur Verfügung gestellt wird, wobei das Kernblech einen im wesentlichen rechteckigen Querschnitt mit einer Breite B, einer Höhe H und einer Dicke D besitzt, aus einem Jochbereich mit einer Höhe j im Bereich einer Symmetrieachse besteht und abgeschrägte Ecken aufweist; weiterhin zwei Polschenkel aufweist, die parallel zur Symmetrieachse verlaufen, mit je einem oberen Ende, welches in den Jochbereich übergeht, einem unteren Ende, welches eine Breite b besitzt und eine Strukturierung aufweist, die ihrerseits aus nebeneinander liegenden Polzähnen und Polzahnlücken mit einer Teilungsperiode $T_z$ gebildet ist; wobei die Polschenkel am unteren Ende durch einen Spalt mit einer Breite s voneinander beabstandet sind und die seitliche Begrenzung einer mittig im Kernblech angeordneten Aussparung bilden; wobei diese Aussparung der Aufnahme des Spulendrahtes dient, einen kreisrunden Querschnitt mit einem Durchmesser d besitzt und der sich bis zum unteren Ende der Polschenkel erstreckende Spalt in die Aussparung mündet; wobei die Polschenkel weiterhin im Bereich der parallel zur Strukturierung verlaufenden Mittellinie des Kernblechs eine schmalste Stelle mit der Breite a aufweisen.
Durch eine derartige Gestaltung des Kernblechs ist es möglich, eine sehr hohe Packungsdichte der Wicklungen zu erzielen, da keine beim Wickelvorgang unzugänglichen Bereiche innerhalb des Kernblechs vorhanden sind. Die vorgeschlagene Ausgestaltung des Kernblechs ermöglicht weiterhin eine im Vergleich zum Stand der Technik wesentlich erhöhte Antriebskraft, die von den aufzubauenden Antrieben erzeugt werden kann. Es wird eine besonders günstige Leitung des Magnetflusses erreicht, die zu hohen Feldstärken im Bereich der Polzähne führt, wo im Zusammenspiel mit der komplementären Passiveinheit eines Direktantriebs die Antriebskräfte erzeugt werden.

Weitere vorteilhafte Ausgestaltungen des Kernblechs zeichnen sich durch bestimmte geometrische Verhältnisse aus, die im einzelnen in den Unteransprüchen 2 - 11 angegeben sind. Die bevorzugten geometrischen Verhältnisse dienen vor allem der Erzeugung des optimierten Magnetflusses im Kernblech, womit im Ergebnis erhöhte Antriebskräfte erzeugt werden. Gleichzeitig wird durch die vorgeschlagenen konstruktiven Verhältnisse erreicht, daß an den Kernblechen kein für den gewünschten Magnetfluß unnötiges Material vorhanden ist, wodurch das sich ergebende Gesamtgewicht des aufzubauenden Sputenkörpers möglichst gering gehalten wird. Ein geringes Gewicht ist erwünscht, um bei den zur Verfügung stehenden Antriebskräften hohe Beschleunigungen zu ertielen. Die vorliegende Offenbarung gibt darüber hinaus unter Verwendung der beschriebenen Kernbleche einen (nicht beanspruchten) Spulenkörper für Direktantriebe an, der zwei gleichartige, parallel zueinander angeordnete Kernblechpakete umfaßt, die aus einer Vielzahl paketierter erfindungsgemäßer Kernbleche zusammengesetzt sind, wobei die durch die strukturierten Enden der Polschenkel gebildeten Laufflächen in einer Ebene liegen, in die Kernblechpakete wenigstens ein Spulendraht mit einer Vielzahl von Wicklungen im Bereich der etwa kreisrunden Öffnung der Kernbleche eingelegt ist, wobei die Wicklungen jeweils an der Stirnseite des ersten Kernblechpakets austreten und an der nächstliegenden Stirnseite des zweiten Kernblechpakets in dieses wieder eintreten, und wobei die beiden Kernblechpakete durch eine Jochbrücke aus magnetflußleitendem Material über die jeweiligen Jochbereiche miteinander verbunden sind, wobei zwischen Jochbrücke und Kernblechpaket Permanentmagnete angeordnet sind. Die Permanentmagnete, die mit den beiden Kernblechpaketen verbunden sind, können vorteilhaft auch aus einem Magnetstück oder aus mehreren in Längsrichtung des Kernbleches geteilten Magnetstücken bestehen. Die Magnetisierung (Nord-Süd-Polung) im Bereich, der mit dem ersten Kernblechpaket verbunden ist, ist in entgegengesetzter Richtung erfolgt als die Magnetisierung in dem Bereich, der mit dem zweiten Kernblechpaket verbunden ist. Die Jochbrücke ist mit dem Magnetstück oder den Magnetstücken, und den jeweiligen Jochbereichen durch Magnetkräfte miteinander verbunden.

Die Kernblechpakete können durch ein Zwischenstück in Form eines relativ unelastischen Körpers aus nichtmagnetisch leitendem Material voneinander getrennt und so aufgebaut sein, daß der Spulenkörper eine relativ starre Einheit ergibt. Das Zwischenstück kann z.B. aus Kunststoff hergestellt sein und mit den Kernblechpaketen verklebt sein.

Die von den Polzähnen und der in den Polzahnlücken und im Raum zwischen den Kernblechpaketen und dem Zwischenstück befindlichen Füllmasse gebildete Fläche ist geschliffen, damit ein geringer Luftspalt zwischen Aktiv- und Passiveinheit erreicht werden kann.

Die Bereiche der Kernblechpakete, die mit den Permanentmagneten bzw. dem Magnetstück oder den Magnetstücken verbunden sind, sollen möglichst auch eine sehr glatte Oberfläche besitzen, damit keine wesentlichen parasitären Luftspalte auftreten können und der Magnetfluß möglichst gleichmässig wirkt.

Mit einem derartigen Spulenkörper lassen sich insbesondere aufgrund der geringen äußeren Abmessungen in Bezug auf die zu erzielenden Antriebskräfte in vorteilhafter Weise Direktantriebe aufbauen, insbesondere wenn die vorgeschlagenen Spulenkörper in modularer Bauweise zu einem Antrieb kombiniert werden, der eine Vielzahl solcher Spulenkörper umfaßt.

Eine besonders vorteilhafte Form des Spulenkörpers zeichnet sich dadurch aus, daß der Durchmesser der Öffnung der Kernbleche ca. 8 mm beträgt, und daß ein Spulendraht mit einem Querschnittsdurchmesser von ca. 0,5 mm in ca. 60 Windungen in die Kernblechpakete eingelegt ist. Diese Kombination zwischen einem in seinen Maßen definierten Kemblech und der vorgeschlagenen elektrischen Wicklung gewährleistet die Erzeugung eines besonders hohen Magnetflusses, womit hohe Antriebskräfte erzielbar sind. Gleichzeitig kann der erforderliche Wicketaufwand in vertretbaren Grenzen gehalten werden und ein Spulendraht mit gut handhabbaren mechanischen Eigenschaften eingesetzt werden. Bei der erzielten Packungsdichte ist außerdem eine ausreichende Wärmeabfuhr gewährleistet, um thermische Belastungen gering zu halten.

Die Erfindung schlägt für die Herstellung eines Spulenkörpers, bei dem Kernbleche mit kreisrunden Öffnungen eingesetzt sind, weiterhin ein Verfahren vor, mit folgenden Verfahrensschritten:

a) eine Vielzahl von erfindungsgemäßen Kernblechen werden dicht zu Kernblechpaketen paketiert,
b) zwei Kernblechpakete werden derart in einer Wickelvorrichtung plaziert, daß die von den geraden Kanten der Jochbereiche gebildeten Rückenflächen unmittelbar aneinander liegen oder nur geringfügig voneinander beabstandet sind,
c) wenigstens ein Spulendraht wird mit einer Vielzahl von Windungen durch die beiden Kernblechpakete gewunden, wobei der jeweilige Drahtabschnitt von der Lauffläche durch den Spalt zwischen den Polschenkeln in die kreisrunde Öffnung der Kernbleche eingelegt wird,
d) die Kernblechpakete werden um die durch den Mittelpunkt der kreisrunden Öffnung der Kernbleche verlaufende Achse verdreht, bis die Laufflächen beider Kernblechpakte in einer Ebene nebeneinander liegen,

e) die Kernblechpakete werden durch ein Zwischenstück auf Abstand gehalten, daß möglichst starr ist und fest mit den Kernblechpaketen verbunden, z.B. verklebt ist, und in einen Gehäusekörper eingesetzt, dort entsprechend ausgerichtet und durch Vergießen bzw. Verkleben befestigt,

f) in die Laufflächen der Kernblechpakete werden die aus den Polzähnen und Polzahnlücken bestehenden Strukturen eingebracht,

g) die Polzahnlücken, die Spalte zwischen den Polschenkeln und die Lücke zwischen den Kernblechpaketen werden mit einer Füllmasse aufgefüllt und die Kernblechpakete an den Rückenflächen durch eine Jochbrücke und magnetisches Material verbunden.

Dieses Verfahren bietet den Vorteil, daß die elektrische Wicklung ohne komplizierte und teure Wikkelautomaten in den Spulenkörper eingebracht werden kann. Es können einfache Automaten zum Einsatz kommen oder bei kleineren Stückzahlen auch von Hand die Wicklungen aufgebracht werden. Komplizierte Führungs- oder Einlegeinstrumente sind nicht erforderlich, da aufgrund der kreisrunden Öffnung im Kernblech, in welche die Wicklung eingebracht wird, ein selbsttätiges Ausrichten des Spulendrahtes gewährleistet ist und ohne zusätzliche Vorkehrungen eine sehr hohe Pakkungsdichte erzielt werden kann.

Weitere Vorteile, Einzelheiten und Weiterbildungen der vorliegenden Erfindung ergeben sich aus der Beschreibung bevorzugter Ausführungsformen, unter Bezugnahme auf die Zeichnung.

Es zeigen: .

Fig. 1   ein Kernblech für einen Spulenkörper;
Fig. 2   das Kernblech aus Fig. 1 mit Maßlinien und zugehörigen Bezeichnungen;
Fig. 3   das Kernblech aus den Fig.n 1 und 2 mit eingezeichneter Strukturierung, bestehend aus Polzähnen und Polzahnlücken mit rechteckigem Querschnitt;
Fig. 4   eine zweite Ausführungsform des Kernblechs mit Polzähnen und Polzahnlücken mit trapezförmigem Querschnitt;
Fig. 5   eine dritte Ausführungsform des Kernblechs mit einer elliptischen Aussparung;
Fig. 6   einen Spulenkörper mit zwei Kernblechpaketen in einer vereinfachten Ansicht von der Seite;
Fig. 7   den Spulenkörper aus Fig. 6 in einer vereinfachten Schnittansicht von vorn;
Fig. 8   den Spulenkörper aus den Fig.n 6 und 7 in einer vereinfachten Ansicht von oben;
Fig. 9   den Spulenkörper aus den Fig.n 6 und 7 während eines frühen Verfahrensschrittes bei der Herstellung in einer Seitenansicht;
Fig. 10   einen Spulenkörper, wie er in das Gehäuse der Aktiveinheit eingesetzt wird.

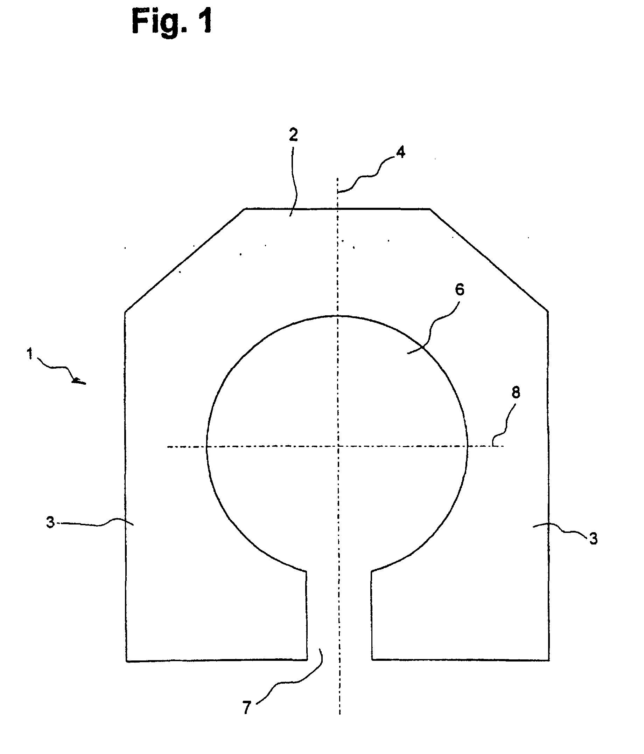

Fig. 1 zeigt ein Kernblech 1. Das Kernblech besteht beispielsweise aus Weicheisenmaterial und kann durch Stanzen aus einem entsprechenden Rohblech hergestellt werden. Das Kernblech 1 besteht aus einem Jochbereich 2 im oberen Abschnitt und aus zwei Polschenkeln 3, die sich ausgehend vom Jochbereich nach unten erstrecken. Die Polschenkel 3 sind symmetrisch zu einer durch den Mittelpunkt des Kernblechs verlaufenden Symmetrieachse 4 angeordnet und bilden die seitliche Begrenzung einer im gezeigten Beispiel kreisrunden Öffnung in der Mitte des Kernblechs. Nach oben wird die Öffnung 6 durch den Jochbereich 2 begrenzt.

Die Öffnung bzw. Aussparung in der Mitte des Kernblechs dient der Aufnahme eines oder mehrerer Spulendrähte, die in mehreren Wicklungen durch das Kernblech hindurch verlaufen.

Für das weiter unten beschriebene Herstellungsverfahren eignen sich kreisrunde Öffnungen besonders gut aber auch elliptische Querschnitte (nicht beansprucht) bieten bestimmte Vorteile, die weiter unten noch beschrieben sind.

In ihrem unteren Bereich sind die Polschenkel 3 durch einen Spalt 7 voneinander getrennt, der sich bis in die Öffnung 6 erstreckt. Die äußeren Ecken des Jochbereiches 2 sind jeweils nach unten abgeschrägt, im gezeigten Beispiel in einem Winkel von etwa 45°.

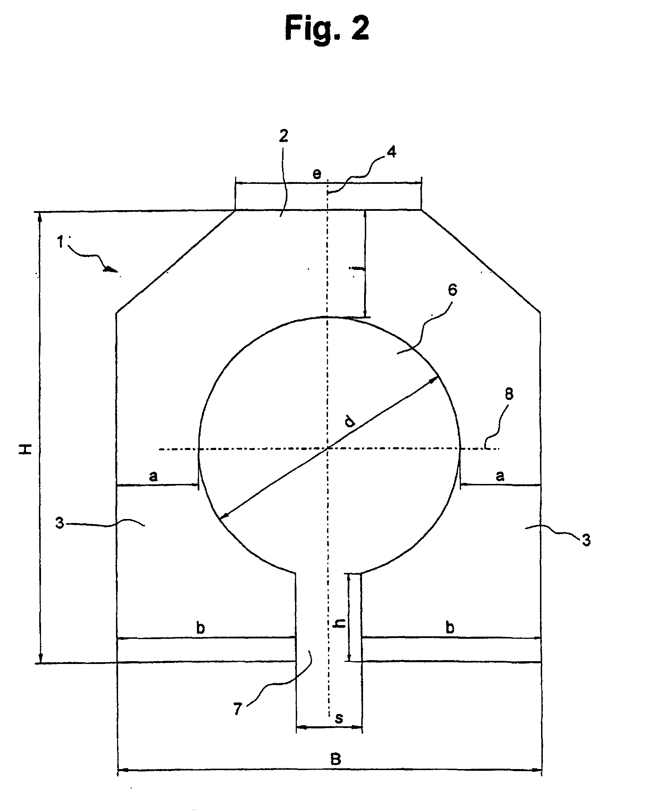

In der Figur 2 sind in der Abbildung des Kernblechs 1 Maßlinien angebracht, denen einzelne Bezeichnungen (Buchstaben) zugeordnet sind, anhand derer im weiteren günstige geometrische Verhältnisse beschrieben werden sollen.

Das Kernblech 1 hat eine Gesamtbreite B, eine Gesamthöhe H und eine Dicke D. Die Kernblechdicke D kann beispielsweise 0,35 mm betragen. Zur Herstellung des Kernbleches kommen Standardmaterialien zum Einsatz, wodurch die Dicke in der Regel vorgegeben ist. Für in der Feingerätetechnik eingesetzte Direktantriebe eignen sich besonders Kernbleche mit einer Breite B = 13,2 mm und einer Höhe H = 13,8 mm.

Die kreisrunde Öffnung 6 besitzt einen Durchmesser d, der im Fall der genannten Hauptabmessungen vorzugsweise d = 7,8 mm beträgt. An der Stelle der Symmetrieachse 4 besitzt der Jochbereich 2 eine Höhe j. Die gerade Außenkante des Jochbereiches 2 hat eine Breite e.

An der schmalsten Stelle der Polschenkel 3, also entlang einer Mittellinie 8, die senkrecht zur Symmetrieachse 4 durch den Mittelpunkt des Kernbleches verläuft, ist eine Breite a der Polschenkel vorgesehen. Die Polschenkel 3 weisen an ihrem unteren Ende eine Breite b auf. Der Spalt 7 besitzt eine Breite s und eine Höhe h.

Zur Optimierung des Verhältnisses zwischen der durch die Materialmenge bestimmten Masse und dem damit in Verbindung stehenden Volumen einerseits und der möglichen Kraft, die von einem mit den vorgeschlagenen Kernblechen aufgebauten Motor erzeugt werden kann, andererseits, ist es besonders zweckmäßig, wenn folgende Verhältnisse eingehalten werden:

Die Breite b des unteren Endes der Polschenkel 3 soll b ≥2 • a betragen. Angestrebt ist eine gleichmäßige Magnetflußdichte in den interessierenden Bereichen des Kernblechs. Sofern die unteren Enden der Polschenkel mit Polzähnen und Polzahnlücken gleicher Breite versehen sind, steht also als wirksame Polzahnfläche die Hälfte der Breite b zur Verfügung. Prinzipiell ist eine große Fläche, also möglichst große Breite b am unteren Ende der Polschenkel angestrebt, da dies die Bereiche der Krafterzeugung bei einem aufzubauenden Direktantrieb sind. Wird das Verhältnis zwischen b und a jedoch anders gewählt, entstehen im Betriebszustand entweder Bereiche, die nicht vollständig vom Magnetfluß durchströmt werden oder Bereiche, in denen eine zu hohe Flußdichte vorliegt, wodurch bestimmte Materialbereiche zu früh in die magnetische Sättigung geraten oder jeweils am Ende der Polschenkel keine gleichmäßige Flußdichteverteilung erzielt werden kann und damit die erzeugbaren Antriebskräfte nicht optimal sind.

Vorzugsweise steht die Breite a an der schmalsten Stelle der Polschenkel 3 zur Höhe j des Jochbereiches etwa im Verhältnis a:j = 1:1,3, womit im gesamten Kernblech eine optimierte Magnetflußverteilung erreicht wird.

Der Durchmesser der Öffnung 6 bestimmt sich vorzugsweise nach der Formel d = (2,5 bis 3,5) • a. Besonders geeignet ist folgende Beziehung: d = 3,2 • a.

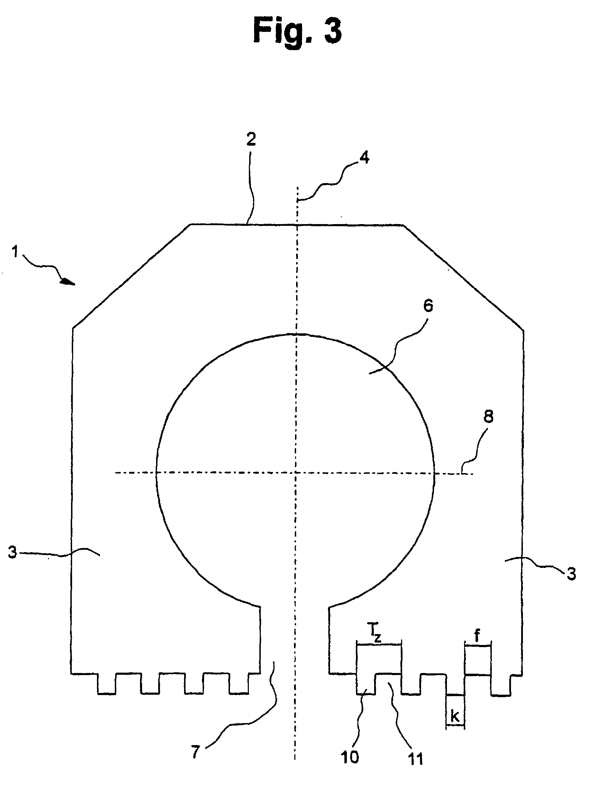

Bei dem in Fig. 3 dargestellten Kernblech sind an den unteren Enden der Polschenkel 3 einzelne Polzähne 10 und Polzahnlücken 11 dargestellt. Bei derhier gezeigten Ausführungsform besitzen Polzähne 10 und Polzahnlücken 11 einen im wesentlichen rechteckigen Querschnitt. Durch die Polzähne 10 und Polzahnlücken 11 wird eine Strukturierung ausgebildet, die eine Teilungsperiode $T_z$, umfassend jeweils einen Polzahn und eine Polzahnlücke. besitzt und für die Funktion eines Direktantriebes zwingend erforderlich ist. Die Polzähne müssen an der Unterkante der Polschenkel 3 so angeordnet werden, daß bei einer gewünschten Teilungsperiode $T_z$ möglichst viel Weicheisenmateriat zur Ausbildung der Kraftfelder zur Verfügung steht; jedoch ist es dienlich, wenn an die Außenkanten und an die zum Spalt 7 gewandten Kanten der Poischenkel unmittelbar ein Polzahn 10 angrenzt, da aufgrund von Fertigungstoleranzen nicht gewährleistet werden kann, daß immer ein vollständiger Polzahn 10 an diesen Kantenbereichen ausgebildet ist. Definierte Kraftwirkungen zwischen der Aktiveinheit und der Passiveinheit eines Direktantriebes lassen sich aber nur dann erzielen, wenn die Polzähne 10 an allen Stellen vollständig ausgebildet sind. Die Polzähne und Polzahnlücken werden daher zweckmäßiger Weise so an den unteren Enden der Polschenkel 3 angeordnet, daß jeweils ein Bereich einer Polzahnlücke an den Außenkanten der Polschenkel angeordnet ist. Damit eine Antriebskraft erzeugt werden kann, müssen die Polzähne am linken Polschenkel einen definierten Versatz gegenüber den Polzähnen am rechten Polschenkel aufweisen. Dieser Versatz beträgt in der Regel ½ • $T_z$ und läßt sich vorzugsweise durch geeignete Dimensionierung der Breite s des Spalts 7 einstellen. Die Breite s des Spaltes berechnet sich:

$$s = T_z \bullet (i + \tfrac{1}{2}),$$

wobei i eine natürliche Zahl ist, vorzugsweise 1 oder 2. Damit steht die Gesamtbreite B des Kernblechs in unmittelbarem Zusammenhang mit der Teilungsperiode $T_z$ und ergibt sich wie folgt:

$$B \geq 2 \bullet z \bullet T_z + s,$$

wobei z die gewünschte Anzahl von Polzähnen ist. Andererseits ist die Gesamtbreite B auch durch folgende Formel bestimmt:

$$B = 2 \bullet a + d.$$

Unter Berücksichtigung des oben genannten Verhältnisses zwischen dem Durchmesser d und der Breite a ergibt sich ein Vorzugswert von a = 0,19 • B.

Der Spalt 7 besitzt die Höhe h, die mindestens gleich der Teilungsperiode $T_z$ sein muß. Daraus ergibt sich die Gesamthöhe H unter Berücksichtigung der oben genannten Verhältnisse zu: H ≥ $T_z$ + d + 1,3 • a.

Die aus Polzähnen und Polzahnlücken bestehende Strukturierung kann theoretisch bereits bei der Herstellung der einzelnen Kernbleche angebracht werden. Beim Paketieren der einzelnen Kembleche zu Kernblechpaketen kommt es aufgrund der Herstellungstoleranzen aber zwangsläufig zu einem gewissen Versatz, so daß die Kernblechpakete keine sauber strukturierten Polzähne und Polzahnlücken aufweisen. Daher ist es zweckmäßig, die Strukturierung erst nach dem Paketieren in das fertige Kernblechpaket einzubringen, beispielsweise durch Fräsen oder Ätzen.

Die in Fig. 3 gezeigte Struktur am unteren Ende der Polschenkel ergibt sich z.B. nach einem Fräsvorgang, wobei Potzähne und Polzahnlücken einen rechteckigen Querschnitt aufweisen. Der Polzahn 10 besitzt am Zahnkopf eine Breite k, und die Polzahnlücke 11 weist an den zum Vollmaterial gewandten Fußbereich eine Breite f auf. Wenn die Breite k zur Breite f im Verhältnis von 21 : 29 steht, ergeben sich Vorteile bei einem gleichmäßigen Lauf des aufzubauenden Motors, da die Feldänderungen einem sinusförmigen Verlauf besser angenähert sind. Zu bevorzugende Werte für die Teilungsperiode $T_z$ betragen 0,64 mm, 1,0 mm und 1,28 mm.

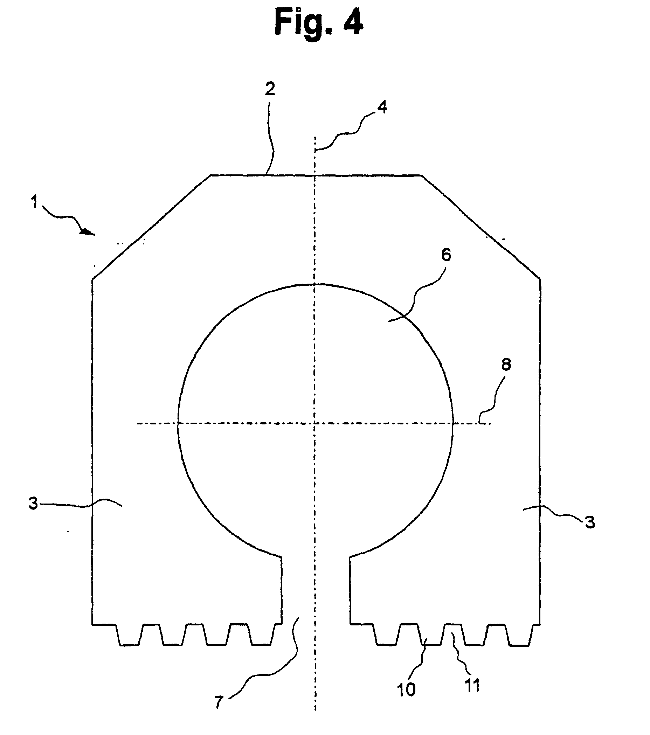

Fig. 4 zeigt eine abgewandelte Ausführungsform des Kernblechs, welches sich vor allem durch die veränderte Formgebung der Polzähne 10 und Polzahnlücken 11 am Ende der Polschenkel 3 von der bisher beschriebenen Ausführungsform unterscheidet. Es hat sich gezeigt, daß höhere Antriebskräfte erzielt werden können, wenn die Polzähne etwa pyramidenstumpfförmig ausgelegt sind. Der in der Fig. 4 gezeigte Querschnitt der Polzähne 10 ist somit trapezförmig, wobei der Polzahnkopf eine geringere Breite aufweist als der Fuß des Polzahns. Derartige Formen lassen sich besonders einfach unter Anwendung von Ätztechnologien herstellen.

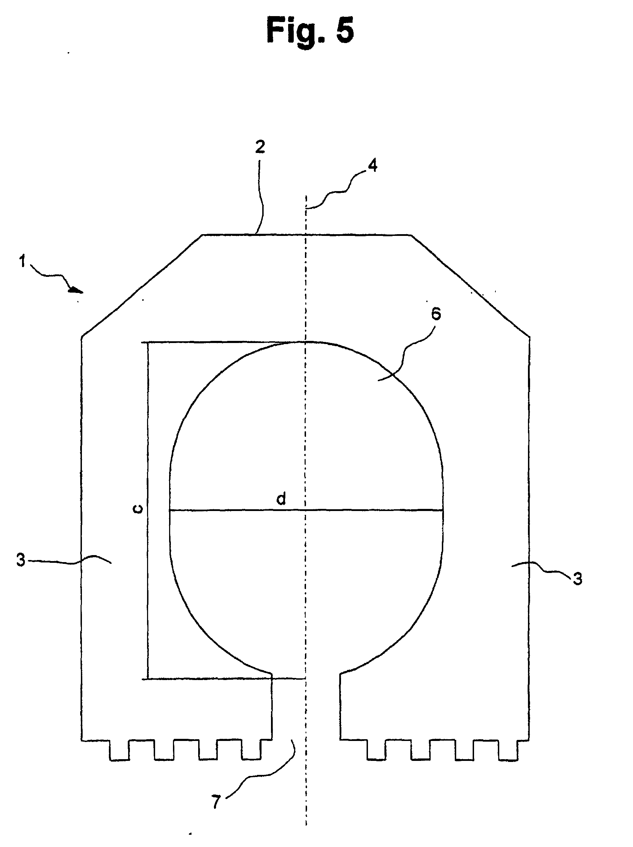

Fig. 5 zeigt eine weiterhin abgewandelte (nicht beanspruchte) Form des Kernblechs, wobei der wesentliche Unterschied in der veränderten Formgebung der Öffnung 6 besteht.

Es hat sich gezeigt, daß man bei der Herstellung von Direktantrieben bei der Wahl der Gesamtbreite B des Kembleches durch äußere Faktoren begrenzt ist. Der maximale Durchmesser der Öffnung 6 ist somit beschränkt, da die Breite a der Polschenkel 3 durch die gewünschte Magnetflußdichte vorgegeben ist. Bei der in Fig. 5 gezeigten Form ist die Öffnung 6 elliptisch ausgelegt, wobei der Längsdurchmesser c entlang der Symmetrieachse 4 größer ist als der Querdurchmesser d entlang der Mittellinie 8. Im Ergebnis steht bei gleichbleibender Gesamtbreite B des Kernbleches mehr Wickelraum zur Verfügung. Damit können Spulendrähte mit vergrößertem Querschnitt eingesetzt werden. Dies hat den Vorteil, daß bei gleichbleibender Stromstärke eine geringere Erwärmung des Spulenkörpers und damit des gesamten Antriebssystems hervorgerufen wird. insbesondere beim Aufbau von Präzisionsantrieben spielt die Vermeidung übermäßiger Erwärmung eine herausragende Rolle, da die durch die Erwärmung hervorgerufene Ausdehnung des Materials eine der wesentlichsten Fehlerquellen ist.

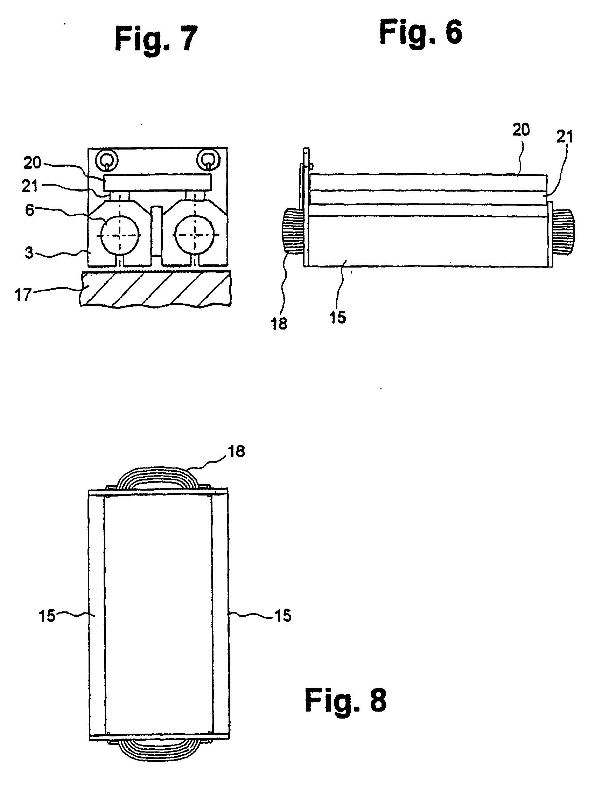

In Fig. 6 ist eine vereinfachte Seitenansicht eines Spulenkörpers für einen Direktantrieb gezeigt, der unter Verwendung der beschriebenen Kernbleche aufgebaut ist.

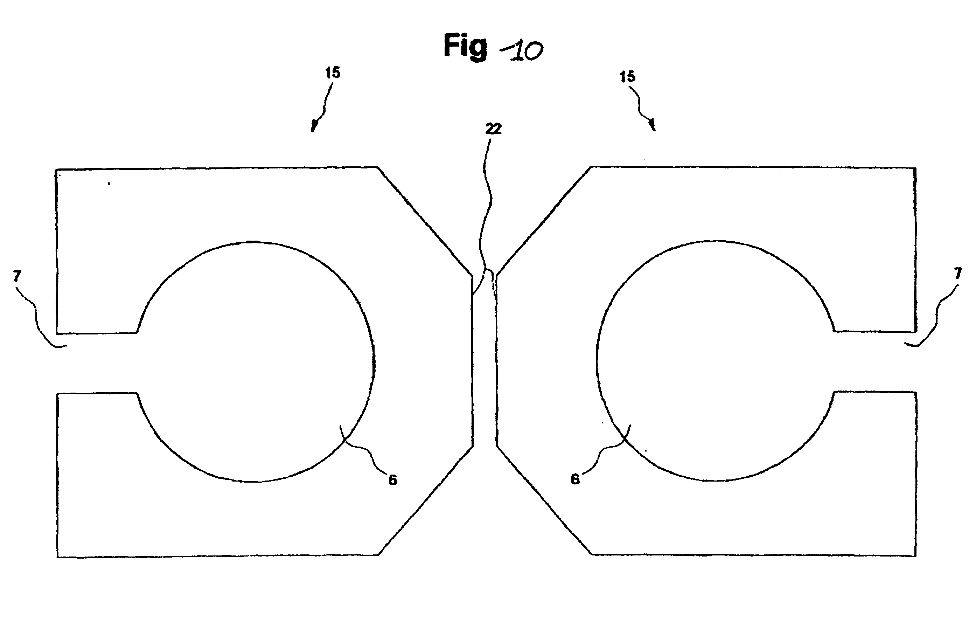

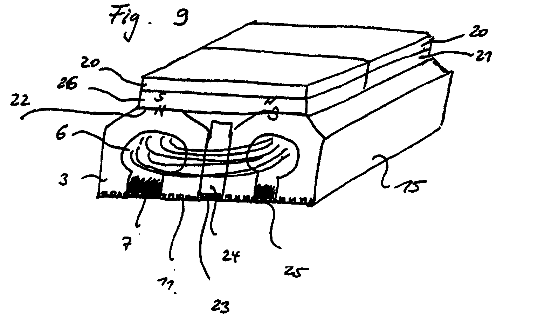

Fig. 7 zeigt den Spulenkörper in einer Schnittansicht von vorn, und Fig. 8 zeigt den Spulenkörper in einer Ansicht von oben.

Der Spulenkörper umfaßt zwei parallel zueinander angeordnete Kernblechpakete 15, die aus einer Vielzahl paketierter Kernbleche zusammengesetzt sind. Die Kernblechpakete sind in einem Gehäusekörper so positioniert, daß die Polzahnstrukturen der Kernblechpakete in ihrem Abstand aufeinander abgestimmt sind, so daß die Funktion des Direktantriebs sichergestellt ist. Die strukturierten Enden der Polschenkel 3 bilden die Lauffläche einer Aktiveinheit eines Direktantriebes. Eine gleichartig strukturierte Lauffläche ist an einer Passiveinheit 17 angeordnet, die in den Figuren nur angedeutet ist. Einzelne Windungen 18 eines Spulendrahtes sind in die Kernblechpakete eingebracht und erstrecken sich durch die kreisrunden Öffnungen 6 der einzelnen Kernbleche. Die Windungen 18 treten an der Stirnseite des ersten Kernblechpakets aus und verlaufen daraufhin in die nächstliegende Stirnseite des parallel angeordneten zweiten Kernblechpakets hinein. Die beiden Kernblechpakete 15 sind über eine Jochbrücke 20 an der Oberseite miteinander verbunden. An der Jochbrücke 20 sind Dauermagneten 21 angeordnet, wobei der Nordpol am ersten Kernblechpaket und der Südpol am zweiten Kernblechpaket plaziert ist. Damit herrscht in den Kernblechpaketen und den einzelnen Kernblechen ein permanenter Magnetfluß vor, der bei einem Stromfluß durch den Spulendraht mit einem temporären Magnetfluß überlagert wird, wodurch jeweils in einem Polschenkel eines Kernblechs eine Verstärkung des Magnetflusses erfolgt und im zweiten Polschenkel des selben Kernbleches der Gesamtmagnetfluß abgeschwächt wird. Durch diese Feldveränderungen werden die gewünschten Antriebskräfte hervorgerufen.

Bei einer abgewandelten Form sind Jochbrücke 20 und Permanentmagnete 21 integral ausgeführt, d.h. die Jochbrücke 20 stellt selbst einen Permanentmagneten dar, dessen Nordpol am ersten Kernblechpaket und dessen Südpol am zweiten Kernblechpaket positioniert ist.

Bereits geringfügige Spalte zwischen Kernblechpaketen einerseits und magnetischer Jochbrücke andererseits führen zu einer Unterbrechung bzw. deutlichen Störung des funktionswichtigen und die erzeugbare Kraft wesentlich bestimmenden Magnetflusses.

Daher ist eine weiterhin abgewandelte Form besonders vorteilhaft, die eine magnetische Jochbrücke aufweist, die elastische Eigenschaften besitzt. Damit ist jederzeit eine flächige Auflage auf den Kernblechpaketen sichergestellt, wodurch die Aufrechterhaltung eines ausreichend starken Magnetfeldes in den Kernblechpaketen gewährleistet wird.

Fig. 9 zeigt zwei Kernblechpakete 15 in einer Ansicht von vorn, während eines frühen Verfahrensschrittes zur Herstellung eines Spulenkörpers.

Das Herstellungsverfahren kommt zum Einsatz, wenn Kernbleche verwendet werden, bei denen die mittig angeordnete Aussparung als kreisrunde Öffnung ausgebildet ist.

In einem ersten Verfahrensschritt werden die Kernbleche zu Kernblechpaketen paketiert, Nachfolgend werden zwei Kernblechpakete in der in Fig. 8 gezeigten Weise in einer Wickelvorrichtung plaziert. Die geraden Kanten der Jochbereiche 2 bilden bei den Kernblechpaketen 15 Rückenflächen 22, die aufeinander gerichtet, unmittelbar aneinander angrenzend oder mit geringem Abstand in der Wickelvorrichtung plaziert werden. Im folgenden Verfahrensschritt wird ein Spulendraht mit einer Vielzahl von Windungen in die Kernblechpakete eingelegt. Dabei wird der jeweilige Drahtabschnitt, von der Laufläche der Kemblechpakete beginnend, durch den Spalt 7 eingeführt und in der Öffnung 6 abgelegt. Der Wickelvorgang verläuft dabei im wesentlichen in einer Ebene, da Hinterschneidungen und Verkantungen des Wickelweges durch die gezeigte Plazierung der Kernblechpakete vermieden werden. Nach dem Wickelvorgang werden die Kernblechpakete um die durch den Mittelpunkt der Öffnung 6 verlaufende Achse gedreht, bis die Laufflächen beider Kernblechpakete in einer Ebene liegen. Es erfolgt eine Verdrehung jedes Kernblechpakets um +/- 90 °. Bei geringfügig ovaler bzw. elliptischer Form der Öffnung 6 in den Kernblechen kann diese Verdrehung noch vorgenommen werden, da die Wicklung in der Regel nicht so dicht eingebracht werden kann, daß keinerlei Ausweichen der Wicklungsdrähte mehr möglich ist. Bei größeren Abweichungen von der runden Form ist eine solche Verdrehung jedoch nicht mehr möglich, und es werden aufwendigere Wickeltechniken und -automaten erforderlich, um die Wicklung in die Kernblechpakete einzubringen, wobei diese bereits während des Wickelvorgangs die endgültige Stellung einnehmen müssen.

Nachdem die Wicklungen aufgebracht sind, werden die Kernblechpakete in einem Gehäusekörper angeordnet. Dabei muß die für die Funktionsweise des Direktantriebs erforderliche korrekte Beabstandung zwischen den Kernblechpaketen eingestellt werden. In diesem eingestellten Zustand werden die Kernblechpakete befestigt, beispielsweise durch Vergießen oder Verkleben. In einem darauffolgenden Verfahrensschritt wird die Strukturierung an den Enden der Polschenkel angebracht. Beispielsweise werden einzelne Nuten eingefräst, um die Polzahnstruktur herauszubilden. Nachfolgend werden die Polzahnlücken und die Spalte 7 zwischen den Polschenkeln mit einer Füllmasse aufgefüllt, beispielsweise ein Epoxidharz.

Die nebeneinander liegenden Kernblechpakete müssen dann noch an den Rückenflächen durch die bereits genannte Jochbrücke 20 und die Permanentmagnete 21 miteinander verbunden werden. Gegebenenfalls werden die Rückenflächen und die Laufflächen geschliffen, um eine hohe Oberflächengüte zu erhalten.

**Patentansprüche**

1. Kernblech (1) für einen Spulenkörper, insbesondere für Direktantriebe, mit im wesentlichen rechteckigem Querschnitt mit einer Gesamtbreite B, einer Gesamthöhe H und einer Dicke D, bestehend aus

   - einem Jochbereich (2) mit

     • einer Höhe j im Bereich einer durch das Kernblech verlaufenden Symmetrieachse (4)
     • und abgeschrägten Ecken,

   - zwei Polschenkeln (3), die parallel zur Symmetrieachse (4) verlaufen,

     • mit je einem oberen Ende, welches in den Jochbereich (2) übergeht,

     • mit je einem unteren Ende, welches

       + eine Strukturierung aufweist, die aus nebeneinander liegenden Polzähnen (10) und Polzahnlücken (11) mit einer Teilungsperiode $T_z$ gebildet ist,
       + und eine Breite b besitzt,

     • die an diesem unteren Ende durch einen Spalt (7) mit einer Breite s voneinander beabstandet sind,
     • welche die seitliche Begrenzung einer mittig im Kernblech angeordneten Aussparung (6) bilden,

       + die der Aufnahme des Spulendrahtes (18) dient,
       + die einen kreisrunden Querschnitt mit einem Durchmesser d besitzt,
       + und in welche der sich bis zum unteren Ende der Polschenkel (3) erstreckende Spalt (7) mündet,

     • welche im Bereich einer parallel zur Strukturierung durch das Zentrum der Aussparung (6) verlaufenden Mittellinie (8) des Kernblechs eine schmalste Stelle mit der Breite a aufweisen.

2. Kernblech nach Anspruch 1, **dadurch gekennzeichnet, daß** die Breite a zur Breite b etwa im Verhältnis 1 : 2 steht.

3. Kernblech nach einem der Ansprüche 1 bis 2, **dadurch gekennzeichnet, daß** die Breite a zur Höhe j etwa im Verhältnis 1 : 1,3 steht.

4. Kernblech nach einem der Ansprüche 1 bis 3, **dadurch gekennzeichnet, daß** die Polzähne (10) eine Breite k und die Polzahnlücken (11) eine Breite f, jeweils mit einem rechteckigen Querschnitt besitzen, wobei die Breite k zur Breite f etwa im Verhältnis 21:29 steht.

5. Kernblech nach einem der Ansprüche 1 bis 3, **dadurch gekennzeichnet, daß** die Polzähne (10) pyramidenstumpfförmig ausgebildet sind.

6. Kernblech nach einem der Ansprüche 1 bis 5, **dadurch gekennzeichnet, daß** der Durchmesser d der Aussparung (6) im Kernblech zur Breite a an der schmalsten Stelle der Polschenkel (3) etwa im Verhältnis (2,5 bis 3,5):1 steht.

7. Kernblech nach Anspruch 6, **dadurch gekennzeichnet, daß** das Verhältnis von Durchmesser d zur Breite a etwa gleich 3,2:1 ist.

**8.** Kernblech nach einem der Ansprüche 1 bis 7, **dadurch gekennzeichnet, daß** die Ecken des Jochbereichs (2) in einem Winkel von ca. +/- 45 ° abgeschrägt sind.

**9.** Kernblech nach Anspruch 8, **dadurch gekennzeichnet, daß** der zur Mittellinie (8) zugewandte Teil der Abschrägung abgerundet ist.

**10.** Kernblech nach einem der Ansprüche 1 bis 9, **dadurch gekennzeichnet, daß** die Breite e der nach außen gewandten Kante des Jochbereichs (2) zur Breite a der Polschenkel (3) etwa im Verhältnis von 2 : 1 steht.

**11.** Kernblech nach einem der Ansprüche 1 - 10, **dadurch gekennzeichnet, daß** die Gesamtbreite B zur Breite a etwa im Verhältnis von 1 : 0,19 steht, und daß die Gesamthöhe H bestimmt ist durch $H \geq T_z + 4,5 \cdot a$.

**12.** Verfahren zur Herstellung eines Spulenkörpers mit folgenden Verfahrensschritten:

a) eine Vielzahl von Kernblechen nach einem der Ansprüche 1 bis 11, werden zu Kernblechpaketen (15) paketiert,
b) zwei Kernblechpakete werden derart in einer Wickelvorrichtung plaziert, daß die von den geraden Kanten der Jochbereiche (2) gebildeten Rükkenflächen (22) unmittelbar aneinander liegen oder nur geringfügig voneinder beabstandet sind,
c) wenigstens ein Spulendraht wird mit einer Vielzahl von Windungen (18) durch die beiden Kernblechpakete (15) gewunden, wobei der jeweilige Drahtabschnitt von der Lauffläche ausgehend, durch den Spalt (7) zwischen den Polschenkeln, in die Aussparung (6) der Kernbleche eingelegt wird,
d) die Kernblechpakete (15) werden um die durch den Mittelpunkt der Aussparung (6) der Kernbleche verlaufende Achse verdreht, bis die Laufflächen beider Kernblechpakete in einer Ebene nebeneinander liegen,
e) zwischen die Kernblechpakete (15) wird ein Zwischenstück (23) eingebracht und mit den Kernblechpaketen (15) verbunden,
f) die Kernblechpakete werden in einen Gehäusekörper eingesetzt, dort entsprechend ausgerichtet und durch Vergießen bzw. Verkleben befestigt,
g) in die Laufflächen der Kernblechpakete werden die aus den Polzähnen (10) und Polzahnlücken (11) bestehenden Strukturen eingebracht,
h) die Polzahnlücken (11), die Spalte (7) zwischen den Polschenkeln (3) und die Lücke (23) werden mit einer Füllmasse aufgefüllt und die Kernblechpakete (15) an den Rückenflächen (22) durch eine Jochbrücke (20) verbunden, wobei zwischen Jochbrücke (20) und den Kernblechpaketen (15) Permanentmagnete (21) oder ein Magnetstück (26) bzw. mehrere angeordnet sind.

**13.** Verfahren nach Anspruch 12, **dadurch gekennzeichnet, daß** nach dem Paketieren der Kernbleche (1) die Rückenflächen (22) und die Laufflächen geschliffen werden.

**Claims**

**1.** A core lamination (1) for a coil body, especially for direct drives, with essentially rectangular cross-section with a total width **B,** a total height **H** and a thickness **D,** comprising of

- a yoke portion (2) with

 • a height **j** in the region of a symmetry axis (4) running through the core lamination,
 • and beveled corners;

- two pole shanks (3) running parallel to the symmetry axis (4)

 • each with a top end turning into the yoke portion (2),
 • each with a bottom end, which

  + has a structuring consisting of pole teeth (10) and pole tooth gaps (11) placed side by side with a division period **$T_z$,**
  + has a width **b,**

 • which are separated from each other at said bottom end by a gap (7) with a width **s,**
 • which form the side boundary of an opening (6) positioned in the center of the core lamination,

  + which takes in the coil wire (18),
  + which has a circular cross-section with a diameter **d,**
  + and in which the gap (7) leads in, which extends as far as the bottom end of the pole shanks (3),

 • which have a narrowest place with a width **a** in the area of a center line (8) of the core lamination running through the center of the opening (6) in parallel to the structuring.

**2.** The core lamination according to claim 1, **characterized in that** said width **a** is to said width **b** in a ratio of around 1 : 2.

**3.** The core lamination according to claim 1 or 2, **characterized in that** said width **a** is to said height **j** in a ratio of around 1 : 1,3.

**4.** The core lamination according to one of the claims 1 to 3, **characterized in that** said pole teeth (10) have a width **k** and that said pole tooth gaps (11) have a width **f**, each having a rectangular cross-section, whereby the width **k** is to the width **f** in a ratio of around 21 : 29.

**5.** The core lamination according to one of the claims 1 to 3, **characterized in that** said pole teeth (10) are shaped like pyramid stumps.

**6.** The core lamination according to one of the claims 1 to 5, **characterized in that** said diameter **d** of the opening (6) in the core lamination is to said width **a** in a ratio of around (2,5 to 3,5) : 1 at the narrowest position of the pole shanks (3).

**7.** The core lamination according to claim 6, **characterized in that** the ratio of diameter **d** to width **a** is around to 3,2 : 1.

**8.** The core lamination according to one of the claims 1 to 7, **characterized in that** said corners of the yoke portion (2) are beveled with an angle of around +/- 45°.

**9.** The core lamination according to claim 8, **characterized in that** the portion of the slope, which is directed to the center line (8) is rounded.

**10.** The core lamination according to one of the claims 1 to 9, **characterized in that** the width **e** of the outside edge of the yoke portion (2) is to the width **a** of the pole shank (3) in a ratio of around 2 : 1.

**11.** The core lamination according to one of the claims 1 to 10, **characterized in that** said total width **B** is to the width **a** in a ratio of around 1 : 0,19 and that the total height **H** is given by $H \geq T_z + 4,5 \cdot a$.

**12.** Method for producing a coil body comprising the following steps:

a) a plurality of core laminations according to one of the claims 1 to 11 are packaged to a core lamination pack;
b) two core lamination packs are positioned in a winding device in a manner that the back sides (22) formed by the straight edges of the yoke portions (2) are placed next to each other or just slightly distanced from each other;
c) at least one coil wire is wounded with a plurality of windings (18) through the two core lamination packs (15), whereby each particular section of the wire is filled in the opening (6) of the core laminations through the gap (7) between the pole shanks and starting from the contact surface;
d) the core lamination packs (15) are turned around the axis running through the center of the opening (6) of the core laminations, so that the contact surfaces of the core lamination packs lie side by side in the same plane;
e) a connector (23) is inserted between the core lamination packs (15) and is connected with the core lamination packs (15);
f) the core lamination packs are inserted in a housing, are lined up and fixed there by founding or gluing;
g) structuring consisting of pole teeth (10) and pole tooth gaps (11) are formed within the contact surfaces of the core lamination packs;
h) the pole tooth gaps (11), the gaps (7) between the pole shanks (3) and the space (23) are filled with a filler, and the core lamination packs (15) are joined at the back sides (22) by a yoke bridge (20), whereby a permanent magnet (21) or one or some magnet pieces (26) is positioned between the yoke bridge (21) and the core lamination packs (15).

**13.** The method according to claim 12, **characterized in that** the back sides (22) and the contact surfaces are polished after packing of the core laminations (1).

**Revendications**

**1.** Tôle de noyau (1) pour un corps de bobine, notamment pour des entraînements directs présentant une section transversale essentiellement rectangulaire et une largeur totale B, une hauteur totale H et une épaisseur D, et comportant :

- une zone de culasse (2) présentant :

  • une hauteur j dans la zone d'un axe de symétrie (4) s'étendant à travers la tôle de noyau,
  • des coins chanfreinés,

- deux branches polaires (3) s'étendant de façon parallèle par rapport à l'axe de symétrie (4), présentant :

  • à chaque fois une extrémité supérieure qui fusionne avec la zone de culasse (2),

- à chaque fois une extrémité inférieure qui présente :

  - une structure formée par des dents polaires (10) situées l'une à coté de l'autre et par des interstices (11) de dents polaires situés à une distance de séparation $T_z$,
  - et une largeur b

- à l'endroit de cette extrémité inférieure, grâce à une fente (7), une distance de largeur s,
- la limitation latérale d'un évidement (6) disposé au milieu de la tôle de noyau, lequel évidement :

  - sert à recevoir le fil de bobine (18),
  - présente une section transversale circulaire d'un diamètre d,
  - et dans lequel évidement débouche la fente (7) s'étendant jusqu'à l'extrémité inférieure des branches polaires (3)

- l'endroit le plus étroit d'une largeur a situé dans la zone de la ligne médiane (8) de la tôle de noyau s'étendant de façon parallèle par rapport à la structuration et à travers le centre de l'évidement (6).

2. Tôle de noyau selon la revendication 1, **caractérisée en ce que** la largeur a présente environ une relation 1 :2 par rapport à la largeur b.

3. Tôle de noyau selon une des revendications 1 à 2, **caractérisée en ce que** la largeur a présente environ une relation 1 :1,3 par rapport à la hauteur j.

4. Tôle de noyau selon une des revendications 1 à 3, **caractérisé en ce que** les dents (10) polaires présentent une largeur k et que les interstices des dents polaires (11) présentent une largeur f avec, à chaque fois, une section transversale rectangulaire, la largeur k présentant une relation d'environ 21 : 29 par rapport à la largeur f.

5. Tôle de noyau selon une des revendications 1 à 3, **caractérisée en ce que** les dents polaires (10) présentent une forme de tronc pyramidal.

6. Tôle de noyau selon une des revendications 1 à 5, **caractérisée en ce que** le diamètre d de l'évidement (8) dans la tôle de noyau a une relation d'environ (2,5 à 3,5) : 1 par rapport à la largeur a à l'endroit le plus proche des branches polaires (3).

7. Tôle de noyau selon la revendication 6, **caractérisée en ce que** le diamètre d présente une relation d'environ 3,2 :1 par rapport à la largeur a.

8. Tôle de noyau selon une des revendications 1 à 7, **caractérisée en ce que** les coins de la zone de culasse (2) sont chanfreinés à un angle d'environ +/- 45°.

9. Tôle de noyau selon la revendication 8, **caractérisée en ce que** la partie du chanfrein tournée vers la ligne médiane (8) est arrondie.

10. Tôle de noyau selon une des revendications 1 à 9, **caractérisée en ce que** la largeur e du bord tourné vers l'extérieur de la zone de culasse (2) présente une relation d'environ 2 :1 par rapport à la largeur a des branches polaires (3).

11. Tôle de noyau selon une des revendications 1 à 10, **caractérisée en ce que** la largeur présente une relation d'environ 1 : 0,19 par rapport à la largeur a et **en ce que** la hauteur totale est déterminée par $H \geq T_z + 4,5 * a$.

12. Procédé pour fabriquer un corps de bobine présentant les étapes de procédé suivantes :

    a) formation de paquets (15) de tôles de noyau par un assemblage en paquets d'une multitude de tôles de noyau,
    b) Installation de deux paquets de tôles de noyau de sorte qu'un dispositif d'enroulement des surfaces de dos (22) formées par les bords droits de la zone de culasse (2) soient situés directement l'un contre l'autre et présentent seulement une faible distance entre eux.
    c) Enroulement d'au moins un fil de bobine avec une multitude d'enroulement (18) à travers les deux paquets de tôles de noyau (15) ; le tronçon de fil respectif étant inséré à partir de la surface de contact à travers la fente (7) entre les branches polaires dans l'évidement (6) des tôles de noyau.
    d) Torsion des paquets (15) de tôles de noyau autour de l'axe s'étendant à travers le centre de l'évidement (6) des tôles de noyau jusqu'à ce que les surfaces de contact des deux paquets de tôles de noyau soient situées dans un plan l'une à coté de l'autre,
    e) Introduction entre les paquets (15) de tôles de noyau (15) d'une pièce intermédiaire que l'on connecte avec les paquets de tôles de noyau (15),
    f) Introduction des paquets de tôles de noyau dans un corps de boîtier et positionnement de façon correspondante puis fixation par moulage ou coulage,
    g) Placement dans les surfaces de contact des paquets de tôles de noyau des structures composées de dents polaires (10) et d'interstices de dents polaires (11),

h) Remplissage des interstices de dents polaires (11), de la fente (7) entre les branches polaires (3) et de l'interstice (23) d'une matière de remplissage puis raccordement des paquets de tôles de noyau aux surfaces de dos (22) par un pont de culasse (20) en disposant entre le pont de culasse (20) et les paquets de tôles de noyau (15) des aimants permanents (21 ) ou une ou plusieurs pièces d'aimants.

13. Procédé selon la revendication 12, **caractérisée en ce que** les surfaces de dos (22) et les surfaces de contact sont polies après l'assemblage des paquets.

# Fig. 1

# Fig. 2

# Fig. 3

# Fig. 4

# Fig. 5

# Fig. 7

# Fig. 6

# Fig. 8

# Fig 10

EP 0 986 854 B1

Fig. 9